# EUROPEAN PATENT APPLICATION

(11) **EP 2 908 258 A1**
(43) Date of publication of application: **19.08.2015**
(21) Application number: 15154885.6
(22) Date of filing: 12.02.2015
(51) Int. Cl.: G06F 17/30

(54) **Interval based fuzzy database search**

(30) Priority: 12.02.2014 US 201414179307
(71) Applicant: SAP SE, 69190 Walldorf (DE)
(72) Inventor: Herz, Andreas, 69190 Walldorf (DE)
(74) Representative: Richardt Patentanwälte PartG mbB

(57) **Abstract**

A fuzzy database search technique is described for searching a database (160). The technique first prepares a database by first generating a reference hash value for each database entry to represent a value stored in a field of the database entry. The technique then receives search request to search for database entries in the database (160) that have a value stored in the field that is within a provided range. The technique converts the search request into one or more search hash values and matches the search hash values to the reference hash values of the database (160) to rapidly identify database entries that are likely relevant to the search.

## Description

### BACKGROUND

Databases are containers created to store, retrieve, and manage large quantities of information. The database can store the information according to a schema which implements the relevant data structures within the database. The schema can be created from a database model that reflects the structure of the information to be stored in the database.

As more information is added to a database, the size of the database grows. This can cause performance issues, particularly when attempting to locate data in the database. Typically, a database search is performed by a database management system. The database management system receives a search request containing search parameters and searches the database for entries according to the search parameters. Depending on the size of the database, the user can experience a delay between submitting the search request and receiving the results. As databases grow, the delay can also grow, sometimes exponentially.

Besides database size, the delay can also grow due to the complexity of the search request. For example, a search request for a range of values can incur an additional delay since the entire range must be checked for in the database. Similarly, complex search queries require additional processing time. For example, a search request containing conditional statements such as "and" and "or" take more processing time since each conditional parameter must be examined. In certain scenarios such as a data processing environment, searching the database can be undesirably slow due to the length of these delays.

### SUMMARY

Various embodiments provide a method for performing a fuzzy search, a computer system and a computer program product as described by the subject matter of the independent claims. Advantageous embodiments are described in the dependent claims.

In one aspect, the invention relates to a computer implemented method for performing a fuzzy search for data stored in a database. The method comprises:
a) providing a storage parameter descriptive of data entries stored in the database.
b) defining one or more different levels of granularities for encoding values of the storage parameter. For example, a value of the storage parameter may be encoded with a fine granularity using the one or more levels of granularities.
c) for each entry of at least part of the data entries
   o determining a value of the storage parameter. For example, the value of the storage parameter may be received from a user of the database. In another example, the value of the storage parameter may be determined upon storing the entry e.g. by determining the storage time as the storage parameter.
   o determining for the determined value of the storage parameter a smallest level of granularity of the one or more levels of granularities into which at least part of the determined value of the storage parameter is encodable (can be encoded). The smallest level of granularity is a level of granularity into which at least part of the determined value of the storage parameter may be defined or split or encoded (in association with other higher levels of granularities). For example, if the determined value is "13/01/2015", then the smallest level of granularity would be "day" as the value of the storage parameter may be expressed or split into three different levels of granularities i.e. year, month and day.
   o determining a first hierarchy of levels of granularities in which the levels of granularities are ordered from the highest level of the one or more levels of granularities to the determined smallest level of granularity.
   o generating a storage hash value indicative of (or identifying or encoding) the determined value using the levels of granularities of the first hierarchy. Multiple entries of the data entries may have the same storage hash value as they form a single interval of values. For example, the single interval of values may be defined by the lowest level of granularity of the first hierarchy. For example, if the lowest level of granularity of the first hierarchy is "month", all data entries that belong to the same month (and the same year) may have a single same storage hash value.
   o storing the generated storage hash value in a reference field of the database in association with the entry. The reference field may, for example, be a new additional field of the database.
d) receiving a fuzzy search request to search the database, the fuzzy search request including a range of values of the storage parameter.
e) determining as a reference level the lowest level of granularity into which a value of the range of values is encodable (or can be encoded) using the one or more levels of granularities. For example, if the range of values covers values from value A to value B, the level of granularities into which A or B may be encoded is determined, split or written and the smallest level of granularity of the level of granularities for A or B is selected or determined.
f) determining a second hierarchy of levels of granularities in which the levels of granularities are ordered from the highest level of the granularity of the one or more levels of granularities to a selected level of granularity of the one or more levels of granularities ordered higher than the reference level.
g) generating a single search hash value indicative of the range of values using the levels of granularities of the second hierarchy. The generating of the single search hash value is performed using a same method as for generating the storage hash value.
h) searching the database to identify at least a database entry that has a storage hash value of the generated storage hash values matching the search hash value. and
i) returning the identified database entry.

The term "level of granularity" as used herein refers to the level of detail (or degree of fineness or coarseness) in which a value of the storage parameter may be encoded and stored in the database. For example, the storage parameter may comprise time. In this case, a level of granularity may indicate, for example, "year", "half-year", "month", "day" or "hour".

The one or more levels of granularities are different and thus a level of granularity of the one or more levels of granularities may be smaller and/or higher than another level of the one or more levels of granularities. For example, the level of granularity "day" is higher than "hour". In another example, the level of granularity "city" is higher than a level of granularity "street" in case the storage parameter being a location. For example, the lower level of granularity corresponds to a sub-unit or subrange of the higher level of granularity.

The "hash value" refers to a fixed-length value such as string or integer value. For example, the storage hash value and the search hash value may be generated using a first hash function or method as described below.

The above features may have the advantage of increasing the speed of database searches compared to the case where an interval search is performed using two limit values of the interval. The present method performs a single value query instead of a range query (as in the prior art) while obtaining at least the same results in a shorter time period. This may result in saving resources (e.g. processing resources) in a database system configured to perform the present method.

The storage hash value may be generated, for example, by encoding the determined value of the storage parameter with a fine granularity using the granularities of the first hierarchy such that each portion of one or more portions of the determined value corresponds to at least a level of granularity of the first hierarchy. The encoding may comprise assigning to each portion of the determined value associated with a given level of granularity an index that identifies that portion value as being associated with the corresponding level of granularity.

According to one embodiment, the selected level of granularity comprises one of: the smallest level of granularity of the one or more levels of granularities that is higher than the reference level; and the second smallest level of granularity of the one or more levels of granularities that is higher than the reference level.

According to one embodiment, the selected level of granularity is selected such that the search hash value represents a single interval of data entries of the data entries containing (or associated to) the range of values.

This may have the advantage of providing accurate search results compared to the case where search results are generated from an interval that contains only a portion of the range of values. For example, if the range values are covered by two intervals and e.g. the two intervals having two respective storage hash values. Using one of the two hash values may return only search results covered by a single interval which only covers a part of the range of values.

According to one embodiment, the method further comprises in response to determining that a number of returned identified database entries is smaller than a predetermined minimum number of results repeating steps f) -i) for the selected level of granularity being another level of granularity of the one or more levels of granularities that is higher than the selected level of granularity level.

This embodiment may increase the accuracy of the search in the database in that it may provide results as requested.

According to one embodiment, the fuzzy search request indicates the predetermined minimum number of results. In this case, for example, only steps f) to h) may be repeated before step i) is executed.

According to one embodiment, the predetermined minimum number of results is received in response to retuning the identified database entry.

According to one embodiment, the storage parameter comprises at least one of: Storage time, Storage location, time, location or a property or characteristic that describes entries of the database.

In another aspect, the invention relates to a computer implemented method for per forming a fuzzy search for data stored in a database, wherein a storage parameter descriptive of data entries stored in the database is provided, wherein one or more different levels of granularities of values of the storage parameter are defined. The method comprises:
- receiving a fuzzy search request to search the database, the fuzzy search request including a range of values of the storage parameter;
- determining as a reference level the lowest level of granularity into which a value of the range of values is defined using the one or more levels of granularities.
- determining a hierarchy of levels of granularities in which the levels of granularities are ordered from the highest level of the granularity of the one or more levels of granularities to a selected level of granularity of the one or more levels of granularities ordered higher than the reference level;
- generating a single search hash value indicative of the range of values using the levels of granularities of the second hierarchy;
- providing a request to the database to identify a database entry that contains a storage hash value that matches the search hash value; and
- receiving the identified database entry.

In another aspect, the invention relates to a computer implemented method for storing data in a database. The method comprises:
- providing a storage parameter descriptive of data entries stored in the database;
- defining one or more different levels of granularities of values of the storage parameter;
- for each entry of at least part of the data entries
   o determining a value of the storage parameter;
   o determining for the determined value of the storage parameter a smallest included level of granularity of the one or more levels of granularities;
   o determining a first hierarchy of levels of granularities in which the levels of granularities are ordered from the highest level of the one or more levels of granularities to the determined smallest level of granularity;
   o generating a storage hash value indicative of the determined value using the levels of granularities of the first hierarchy;
   o storing the generated storage hash value in a reference field of the database in association with the entry.

In another aspect, the invention relates to a computer program product computer program product comprising computer executable instructions to perform the method steps of the method of any one of the preceding embodiments.

In another aspect, the invention relates to a computer system for performing a fuzzy search for data stored in a database. The computer system is configured for:
- providing a storage parameter descriptive of data entries stored in the database;
- defining one or more different levels of granularities of values of the storage parameter;
- for each entry of at least part of the data entries
   o determining a value of the storage parameter;
   o determining for the determined value of the storage parameter a smallest included level of granularity of the one or more levels of granularities;
   o determining a first hierarchy of levels of granularities in which the levels of granularities are ordered from the highest level of the one or more levels of granularities to the determined smallest level of granularity;
   o generating a storage hash value indicative of the determined value using the levels of granularities of the first hierarchy;
   o storing the generated storage hash value in a reference field of the database in association with the entry;
- receiving a fuzzy search request to search the database, the fuzzy search request including a range of values of the storage parameter;
- determining as a reference level the lowest level of granularity into which a value of the range of values is defined using the one or more levels of granularities.
- determining a second hierarchy of levels of granularities in which the levels of granularities are ordered from the highest level of the granularity of the one or more levels of granularities to a selected level of granularity of the one or more levels of granularities ordered higher than the reference level;
- generating a single search hash value indicative of the range of values using the levels of granularities of the second hierarchy;
- searching the database to identify a database entry that contains a storage hash value that matches the search hash value; and
- returning the identified database entry.

In one embodiment, a computer-implemented method receives, by a processor, a request to search a database, the request including a first search parameter identifying a first range of values. The method then generates, by the processor, at least one search hash value in response to the request, wherein each search hash value represents an interval containing values, each interval being non-overlapping. The method then searches, by the processor, the database to identify a database entry that contains a search hash value from the at least one search hash value in a reference field of the database entry. The method then returns, by the processor, the identified database entry.

In another embodiment, a non-transitory computer readable storage medium stores one or more programs comprising instructions for receiving a request to search a database, the request including a first search parameter identifying a first range of values, generating at least one search hash value in response to the request, wherein each search hash value represents an interval containing values, each interval being non-overlapping, searching the database to identify a database entry that contains a search hash value from the at least one search hash value in a reference field of the database entry, and returning the identified database entry.

In another embodiment, a computer implemented system comprises one or more computer processors and a non-transitory computer-readable storage medium. The non-transitory computer-readable storage medium comprises instructions, that when executed, control the one or more computer processors to be configured for receiving a request to search a database, the request including a first search parameter identifying a first range of values, generating at least one search hash value in response to the request, wherein each search hash value represents an interval containing values, each interval being non-overlapping, searching the database to identify a database entry that contains a search hash value from the at least one search hash value in a reference field of the database entry, and returning the identified database entry.

According to one embodiment, combining the interval corresponding to each search hash value from the at least one search hash value forms a combined interval that encompasses the first range of values.

According to one embodiment, the length of a search hash value is inversely proportional to the length of the interval.

According to one embodiment, the request includes a second search parameter identifying a second range of values and conditional logic joining the first search parameter and the second search parameter.

According to one embodiment, a first database entry matching a first hash value generated from the first search parameter and a second database entry matching a second hash value generated from the second search parameter are identified when searching the database.

According to one embodiment, generating the a search hash value comprises identifying, from a plurality of intervals, an interval that contains at least a portion of the first range of values, wherein the plurality of intervals are a previously identified interval divided into a number of equally sized intervals.

According to one embodiment, the range of values represents a period of time.

The following detailed description and accompanying drawings provide a better understanding of the nature and advantages of the present disclosure.

### BRIEF DESCRIPTION OF THE DRAWINGS

FIG. 1 illustrates a system according to one embodiment;
FIG. 2 illustrates a technique for generating a hash value according to one embodiment;
FIG. 3 illustrates the conversion of a time-based search parameter to a hash value according to one embodiment;
FIG. 4a illustrates the conversion of a time-based search request that includes conditional logic according to one embodiment;
FIG. 4b illustrates the conversion of another time-based search request that includes conditional logic according to one embodiment;
FIG. 5 illustrates a process flow for providing a searching a database according to one embodiment; and
FIG. 6 illustrates an exemplary computer system according to one embodiment.

### DETAILED DESCRIPTION

In the following description, for purposes of explanation, numerous examples and specific details are set forth in order to provide a thorough understanding of the present disclosure. It will be evident, however, to one skilled in the art that the present disclosure as expressed in the claims may include some or all of the features in these examples alone or in combination with other features described below, and may further include modifications and equivalents of the features and concepts described herein.

Various embodiments described herein provide a search technique that can be performed by a database management system to quickly locate database entries that satisfy a search request. The search technique described can prove to be particularly useful for complex search queries that contain conditional statements. The search technique can include preprocessing the database to add reference hashes values to the database entries. The reference hash values can be added to the database entries by modifying the database schema to update an existing field or to add a new field for storing the reference hash value. The field of the database entry that stores the reference hash value can be called a reference hash field.

Once the database has been preprocessed, the search technique can receive a search request containing search parameters. The search parameters can specify a value, a range of values, or multiple ranges of values. The values can be related to time and the ranges of values time intervals. The search parameters can be converted into one or more search hash values using the same or similar algorithm used in the preprocessing. The one or more search hash values, which represent time intervals that encompass the search parameters, can then be used to search for database entries that satisfy the search request. By converting the search parameters into multiple search hash values, a search request containing multiple search parameters can be processed by a single call to determine whether the reference hash value of a database entry matches one of the search hash values.

This can dramatically reduce the time spent on searching the database. The search technique is a type of fuzzy search in that the search is a quick lookup to identify database entries that are likely to be relevant to the search request. While most of the results satisfy the search parameters, there may be some results that do not. Other techniques can subsequently be used to refine the search results. For example after locating database entries that belong to a particular time interval, a second technique can be utilized to determine which database entries out of the database entries located are within a provided geo-location. In other examples, other techniques can be applied to refine or narrow the search results.

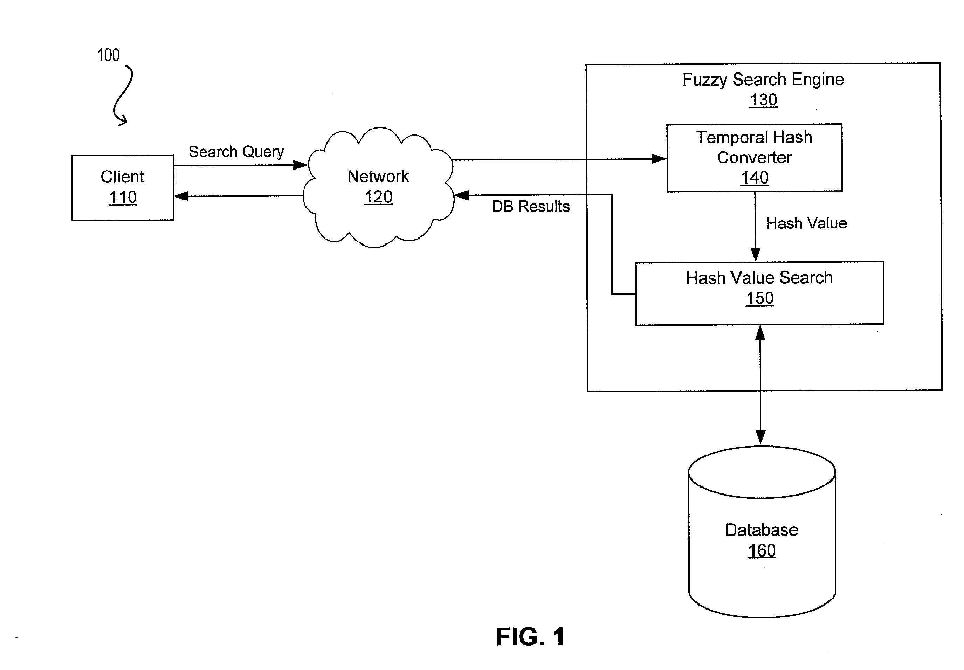

FIG. 1 illustrates system 100 according to one embodiment. System 100 includes client 110, fuzzy search engine 130, and database 160. Client 110 can communicate with fuzzy search engine 130 through network 120. In some examples, network 120 can be a local area network, wide area network, Bluetooth network, or other types of wired or wireless networks. Client 110 can submit a search request to fuzzy search engine 130 via network 120 to search for information in database 160. The search request can be to locate data within database 160 that meet one or more search parameters. Each search parameter can be a value, or a range of values where the search request is to locate database entries that satisfy or are likely to satisfy the value or range of values. In this embodiment, each search parameter is a time or time interval. A database entry satisfies a single value search parameter when the database entry has a corresponding time field that contains the single value. A database entry satisfies a range value search parameter when the database entry has a corresponding time field that contains a time value that is within the range of values specified by the search parameter, which can include the outer boundaries of the range of values. In other embodiments, search parameter can be a unit of distance or some other unit of measurement such as geographical locations.

Fuzzy search engine 130 generates database results in response to the search request. The database results include one or more database entries from database 160 that are likely to satisfy the search request. Fuzzy search engine 130 includes temporal hash converter 140 and hash value search 150. Temporal hash converter 140 is configured to convert the search request received by fuzzy search engine 130 into one or more search hash values. Each search hash value can represent a time interval. In one example, the conversion is performed by a hash function of temporal hash converter 140.

The length of the search hash value generated can be directly related to the duration of the time interval that the search hash value is representing. For instance, a search hash value having a long length can represent a smaller time interval while another search hash value having a short length can represent a longer time interval. In one embodiment, the search hash values can cover a period of time that is substantially equal to the period of time described by the search criteria. For example if the search criteria is for items stored on 1/13/14 from 3-8pm, the search hash value(s) may represent a period of time between 3-8pm on 1/13/14. As another example if the search criteria is for items stored on 1/14/14, the search hash value(s) can represent a period of time between 12:00am and 11:59pm on 1/14/14. In another embodiment, the search hash value(s) may represent a period of time that extends past the period of time specified by the search request. For instance if the search parameter is for items shipped on 1/15/14 from 3-8pm, the search hash value(s) can represent a period of time from 1/15/14 from 1-9pm. This can be due to the time intervals defined by the search hash values For example, a search hash value can be associated with the time interval 1 pm-5pm on 1/15/14 while another search hash value can be associated with the time interval 5pm-9pm on 1/15/14. Since the search parameter is for a time period that overlaps the time intervals associated with both search hash values, temporal hash converter 140 can return both search hash values.

In one embodiment, temporal hash converter 140 can generate search hash values of the same length, regardless of the search parameters in the search request. For example, temporal hash converter 140 can generate one or more search hash values for a search parameter specifying an hour. Temporal hash converter 140 can also generate one or more search hash values of the same length for another search parameter specifying a longer period of time such as an entire day (however more search hash values can be generated for the search parameter specifying a day than the search parameter specifying an hour). In some examples, different search hash values of the same length can represent the same duration of time but at different points in time. For instance, search hash value '13245' can represent a four hour window while hash value '13248' also represents a four hour window, albeit at a different point in time. In some examples, the windows of time associated with the search hash values do not overlap.

In one embodiment, temporal hash converter 140 can receive additional parameters other than the search parameters. The additional parameters can adjust the performance of temporal hash converter 140 and in turn effect the search hash values generated. In one example, a length parameter can specify the length of the search hash value. Shortening the length of the search hash value can have an effect of enlarging the time intervals represented by the search hash value, thereby adjusting the performance of the fuzzy search engine 130. The larger time intervals can also result in a smaller number of search hash values generated. In some examples, the length parameter can also be used when adding search hash values to the data in database 160. This can ensure that the search hash values and the reference hash values are of the same length.

Hash value search 150 is configured to search database 160 for data based on one or more hash values. In one example, hash value search 150 can match reference hash values belonging to database entries in database 160 against the search hash value(s). Database entries that a reference hash value that matches a search hash value can be returned as part of database results. In one embodiment, hash value search 150 can match a reference hash value against a search hash value by matching one or more characters. In some examples, a match can be found even though not all characters of the reference hash value match. For example, hash value search 150 can consider a search hash value with four characters as a match for a reference hash value having six characters when the first four characters of the value matches the hash value. In other words, all of the characters of the search hash value have been matched. Once the database results are identified by hash value search 150, fuzzy search engine 130 can transmit the database results to client 110 via network 120. In some examples, hash value search 150 can match database entries across multiple databases and return the combined results as part of database results.

In one embodiment, additional parameters can be applied to hash value search 150 to broaden or narrow the search. For example, an accuracy parameter can be set to adjust the number of characters in the search hash value to match against reference hash values. The accuracy parameter can be used by client 110 or fuzzy search engine 130 to specify how accurate the database results are to the search parameters. For example if the search hash value is '14325' and the accuracy parameter is set to 4 (representing matching 4 characters max), hash value search 150 can match database 160 for database entries that have a reference hash value containing '1432' as the first four characters. This means that the search can return database entries having a reference hash value set to '14325' plus database entries having a reference hash value set to '14321,' '14322,' 14323,' '14324,' '14326,' '14327,' '14328,' or '14329.' In one example, the search request can include an accuracy parameter provided by client 110 that is used by hash value search 150 when querying database 160.

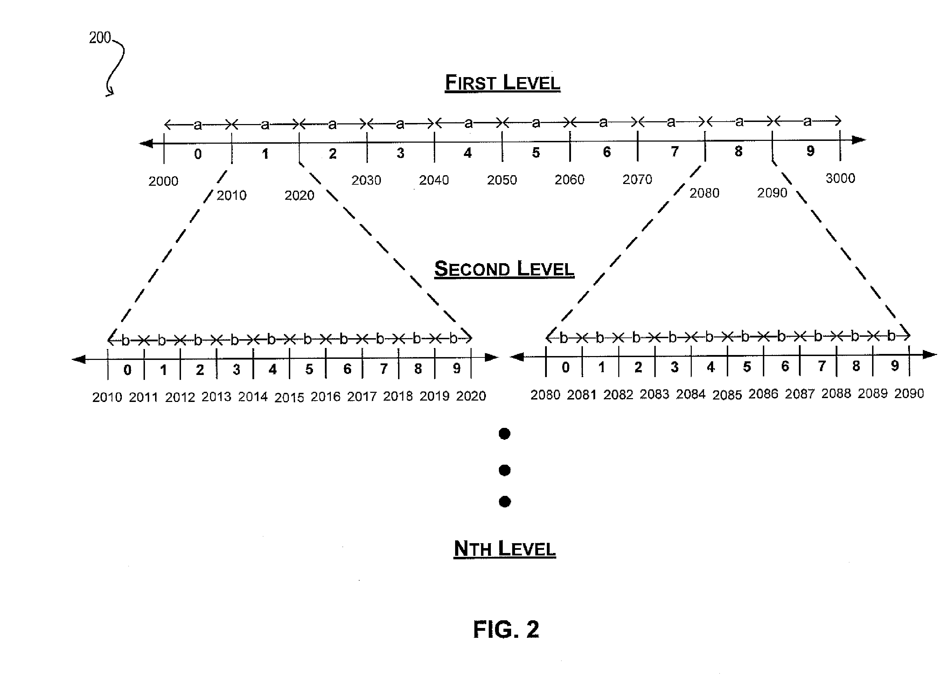

FIG. 2 illustrates a technique for generating a hash value according to one embodiment. Each hash value can represent a non-overlapping window of time, also known as a time interval. Technique 200 begins by specifying a boundaries for the first level. In one example, the boundaries can define the outer limits which all database entries in the database belong to. Here, all database entries have a time value that is between the year 2000 and the year 3000 and thus the time line is set as 2000-3000. Technique 200 divides the time line into a set of equally sized time intervals. Each time interval represents a window of time specified by the letter 'a'. The set can include a base number of equally sized time intervals where the base number can be set by the search engine or by the user. Here, the base number is 10 and thus the outer limits measurement is divided into 10 time intervals of equal length. Each time interval can be assigned a character from a character set. The character set can include a number of unique characters that are equal to the base number. Here, the character set is the numbers '0-9.' Time interval 2000-2010 is assigned the character '0,' time interval 2010-2020 is assigned the character '1,' and so forth.

Technique 200 can then recursively divide each time interval into a set of equally sized sub-time intervals to generate the second level. Similar to the first level, the second level can include a number of sub-time intervals that equal to the base number. Also similar to the first level, the sub-time intervals of the second level can be associated with a character from the character set in a similar manner. Here, sub-time interval 2010-2011 is assigned the character '0,' sub-time interval 2011-2012 is assigned the character '1,' as so forth. Similarly, sub-time interval 2080-2081 is assigned the character '0' and sub-interval 2081-2082 is assigned the character '1.' Each sub-time interval in the second level represents a window of time specified by the letter 'b'. As shown, 10 'b' windows equal to a single 'a' window. In some examples, the characters can be assigned to the sub-time intervals according to their position on the timeline. For instance, sub-time intervals that appear closer to the smaller end of the time line are assigned a character first (2010-2011 is assigned the number '0' and 2018-2019 is assigned the number '8'). Depending on the desired window size, technique 200 can divide each sub-time interval until the desired window size is reached. For example, only a first level is needed if the desired window size is 10 years since each time interval is a 10 year window. However, a third level or higher level is needed if the desired window size is smaller than a one month window. The desired window size can be a variable that is set for technique 200.

In one embodiment, technique 200 can be utilized to prepare the database and to perform a database search. For database preparation, technique 200 can generate a reference hash value in response to receiving a value in a predefined field of a database entry. The technique can be applied to all database entries in the database to generate a reference hash value for the predefined field. Once database preparation has been completed, technique 200 can be utilized to perform a database search. The database search can receive a search request that includes one or more search parameters. Each search parameter can identify a value or a range of values. Technique 200 can be applied to value or range of values from the search parameter to generate one or more search hash values. The one or more search hash values can be matched to the reference hash values of the database entries. The database entries with a reference hash value that matches one of the search hash values can be returned as part of database results.

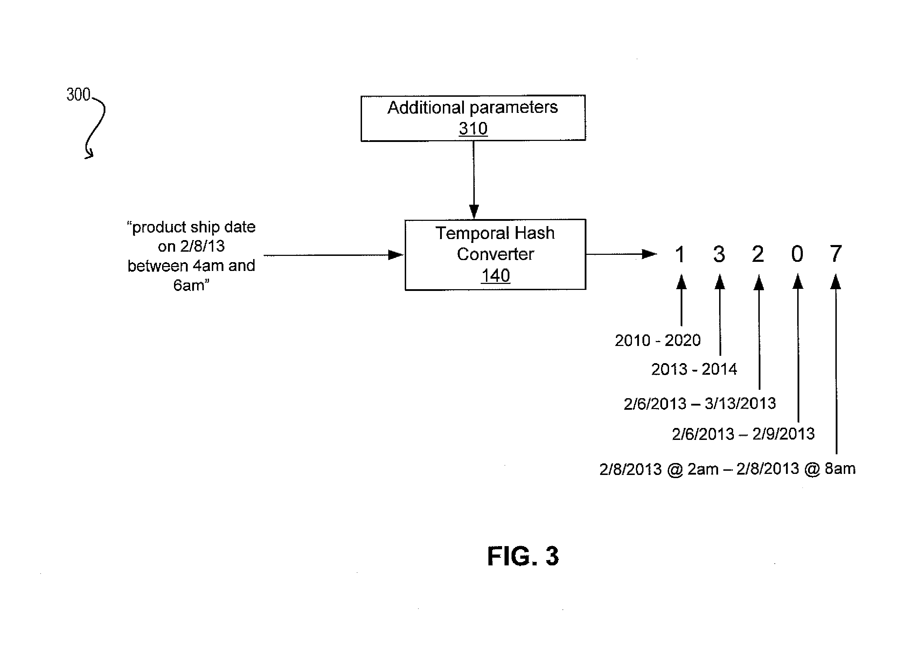

FIG. 3 illustrates the conversion of a time-based search parameter to a hash value according to one embodiment. As shown, temporal hash converter 140 receives a search parameter requesting all products shipped on 2/8/13 between the hours of 4am and 6am. Temporal hash converter 140 receives additional parameters 310. In one example, an additional parameter can be setting the length of the hash value that will be output. In another example, the additional parameter can be setting the desired window size for the hash values. Both of these additional parameters can affect the precision. Typically, a reduction in the precision of the search (e.g., generating shorter hash values) can improve the speed of the search.

Temporal hash converter 140 generates a hash value based on the search parameter and additional parameters 310. The generation of the hash value can be based on a technique such as technique 200 of FIG. 2. Here, the first character of the hash value is set to '1' since the search window of 2/8/13 between 4am and 6am is between 2010 and 2020 in the first level of technique 200. When the window 2010-2020 is further divided, the search window falls within the fourth time interval (e.g., 2013-2014) and therefore a character '3' is appended to the hash value. In a similar fashion, the characters '2,' '0,' and '7' are in turn appended to the hash value. The resulting hash value '13207' represents a time interval of 2/8/13 between 2am and 8am. Since this time interval encompasses the search parameter at the desired precision (as determined by additional parameters 310), temporal hash converter 140 outputs the hash value. This hash value can in turn by utilized by hash value search 150 to locate database entries that have a shipping date between 2 and 8am on 2/8/13. In other examples where the resulting hash value is not related to a time interval that fully encompasses the search parameter, additional hash values can be generated until the one or more hash values encompass the search parameter. The additional hash values can be sequential or non-sequential. In other embodiments, other characters can be used in generating the hash value. For instance, the 26 letters of the alphabet can be used, where each letter represents one of 26 equally spaced time intervals. Each sub-interval would also be divided in 26 equally spaced time intervals. In other embodiments, the search parameters can include distances or other types of measurements, or even numbers.

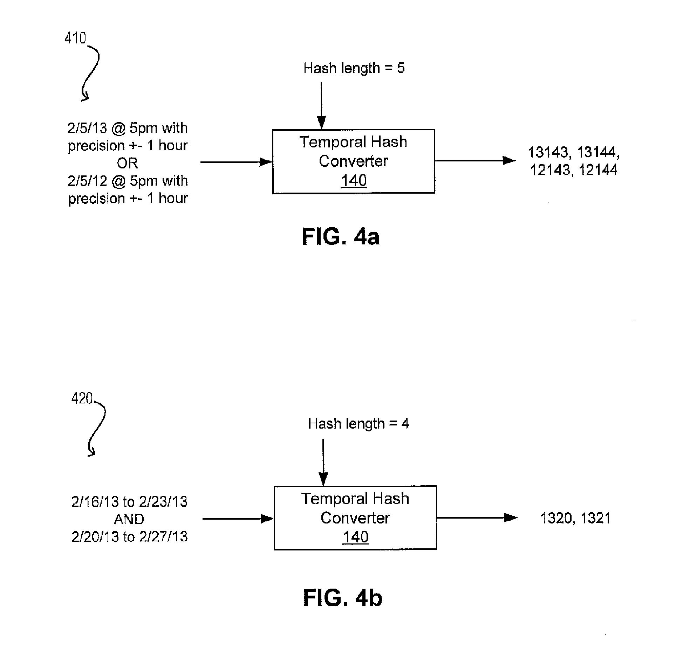

FIG. 4a illustrates the conversion of a time-based search request that includes conditional logic according to one embodiment. As shown in 410, the search request includes two search parameters that are joined by an OR condition. Thus, database entries that match either one of the search parameters should be located. Traditionally, this process requires multiple passes through the database. A first pass is used to identify database entries that satisfy the first search parameter. The results from the first pass are saved in an interim table. A second pass is then used to identify database entries that satisfy the second search parameter. The results from the second pass are then combined with the results in the interim table. Thus, multiple passes are required to process the search request.

In contrast, temporal hash converter 140 can process each search parameter to generate hash values. Since the combination logic is an OR condition, temporal hash converter 140 can join the search hash values generated for each search parameter into a combined list. Hash value search 150 can then search database 160 to locate database entries that match one of the search hash values. Since the search hash values are in a combined list, only a single pass of the search function is needed to locate all potentially relevant database entries.

FIG. 4b illustrates the conversion of another time-based search request that includes conditional logic according to one embodiment. As shown in 410, the search request is two search parameters joined by an AND condition. Temporal hash converter 140 can process each search parameter to generate search hash values and subsequently apply the conditional logic to the generated search hash values. Here, temporal hash converter 140 can generate a first list containing search hash values '1319,' '1320,' and '1321' from the first search parameter of 2/16/13-2/23/13. Temporal hash converter 140 can also generate a second list containing search hash values '1320,' '1321,' and '1322' from the second search parameter 2/19/13-2/25/13. Once the hash values for each search parameter are generated, the conditional logic can be applied. Here, an AND condition is applied to the two lists, resulting in a final list of search hash values. The search hash values can subsequently be utilized by hash value search 150 to locate the potentially relevant database entries in a single pass.

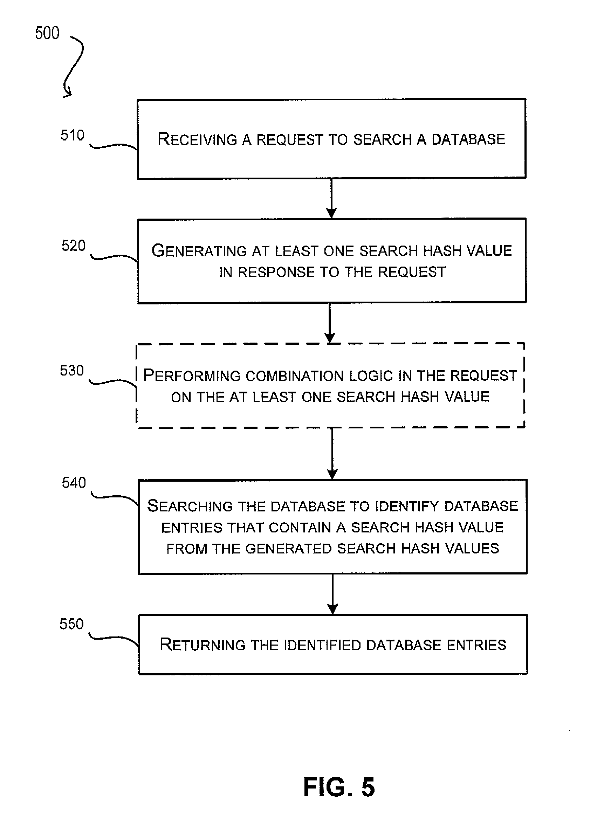

FIG. 5 illustrates a process flow for providing a searching a database according to one embodiment. Process 500 can be stored in computer readable medium and executed by a processor. Process 500 begins by receiving a request to search a database at 510. In one example, the search request can include one or more search parameters and optionally conditional logic for joining the search parameters. A given search parameter can identify a range of values which would satisfy the search. The search parameters can be overlapping. In some examples, other additional parameters can be included that control the precision or accuracy of the search. Searches with high precision can be performed slower but result a smaller set of database results that are more likely to meet the search parameters. In contrast, searches with low precision can be performed faster but return a larger set of database results. In one example, the range of values is a time interval.

After receiving the request, process 500 continues by generating at least one search hash value in response to the request at 520. Each search hash value can represent an interval of values. In one example, the intervals can be non-overlapping. In another example, the intervals represented by the search hash values, when combined, can encompass (i.e., cover) the range of values identified by the search parameters.

After generating the search hash values, process 500 can optionally perform combination logic on the search hash values at 530. In some scenarios, the request can include combination logic to combine search parameters. For example, search parameters can be joined by an OR condition or an AND condition. The remaining search hash values after performing the combination logic are used to perform the search on the database.

Process 500 continues by searching the database to identify database entries that contain a search hash value from the generated search hash values at 540. If combination logic was performed, the resulting search hash values after performing the combination logic are used. Searching the database can include locating database entries that have a value stored in a reference field that matches one of the search hash values. If a match is found, the database entry is considered part of the search results. After searching the database, the identified database entries are returned at 550.

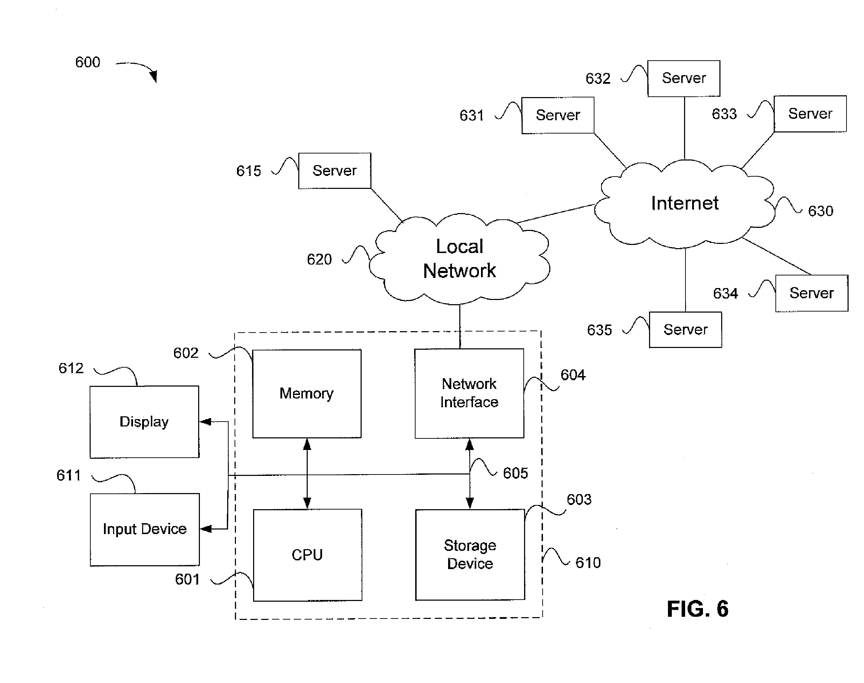

An exemplary computer system 600 is illustrated in FIG. 6. Computer system 610 includes bus 605 or other communication mechanism for communicating information, and a processor 601 coupled with bus 605 for processing information. Computer system 610 also includes a memory 602 coupled to bus 605 for storing information and instructions to be executed by processor 601, including information and instructions for performing the techniques described above, for example. This memory may also be used for storing variables or other intermediate information during execution of instructions to be executed by processor 601. Possible implementations of this memory may be, but are not limited to, random access memory (RAM), read only memory (ROM), or both. A storage device 603 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 603 may include source code, binary code, or software files for performing the techniques above, for example. Storage device and memory are both examples of computer readable mediums.

Computer system 610 may be coupled via bus 605 to a display 612, such as a cathode ray tube (CRT) or liquid crystal display (LCD), for displaying information to a computer user. An input device 611 such as a keyboard and/or mouse is coupled to bus 605 for communicating information and command selections from the user to processor 601. The combination of these components allows the user to communicate with the system. In some systems, bus 905 may be divided into multiple specialized buses.

Computer system 610 also includes a network interface 604 coupled with bus 605. Network interface 604 may provide two-way data communication between computer system 610 and the local network 620. The network interface 904 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 604 sends and receives electrical, electromagnetic, or optical signals that carry digital data streams representing various types of information.

Computer system 610 can send and receive information, including messages or other interface actions, through the network interface 604 across a local network 620, an Intranet, or the Internet 630. For a local network, computer system 610 may communicate with a plurality of other computer machines, such as server 615. Accordingly, computer system 610 and server computer systems represented by server 615 may form a cloud computing network, which may be programmed with processes described herein. In the Internet example, software components or services may reside on multiple different computer systems 610 or servers 631-635 across the network. The processes described above may be implemented on one or more servers, for example. A server 631 may transmit actions or messages from one component, through Internet 630, local network 620, and network interface 604 to a component on computer system 610. The software components and processes described above may be implemented on any computer system and send and/or receive information across a network, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

In the following an example for performing a fuzzy database search in accordance with an embodiment of the present invention is described.

For example, a storage parameter may be provided in order to describe data entries (or data) stored in a database e.g. database 160. The storage parameter may comprise for example time (e.g. storage time or creation time of an entry of the data entries) or geographical location where the entry is originated from. For example, a data entry of the database may comprise at least part of a row or a record of the database.

One or more different levels of granularities may be defined for values of the storage parameter. For example, the one or more levels of granularities may comprise: "1Year", "1 Month", "1 Day", "12Hours", "6Hours", "1 Hour".

For each entry of the data entries stored in the database 160 a value of the storage parameter may be determined. For example, an entry of the database 160 may have a creation date of "10am, 10.10.2009". That creation date may be the value of the storage parameter of that entry. Using the value of the storage parameter a storage hash value may be determined for each entry of the data entries as follows.
a. It is determined for the value of the storage parameter (e.g. creation date "10am, 10.10.2009") the smallest level of granularity of the one or more levels of granularities into which the value of the storage parameter may be encoded. For the creation date example, the smallest level is "1 Hour" since the creation date contains "10am" as a portion of the creation date.
b. A first hierarchy of levels of granularities in which the levels of granularities are ordered from the highest level (e.g. "Year") of the one or more levels of granularities to the determined smallest level (e.g. "1Hour") of granularity may be created. For example, the first hierarchy may be indicated in the following order "1Year"->"1 Month"->"1 Day"-> "12Hours"->"6Hours"->"1 Hour".
c. Using the first hierarchy a storage hash value indicative of the value of the storage parameter may be generated using the levels of granularities of the first hierarchy. For example, all database entries may have a time value (e.g. creation time) that is between the year 2005 and the year 2015 and thus the time line is set as 2005-2015. The time line is thus divided into a set of equally sized time intervals. The set can include a base number of equally sized time intervals where the base number can be set by a search engine (e.g. 130) or by the user (the base number corresponds to a level of granularity; in this case "year"). Here, the base number is 1 (because the level of granularity is "1Year") and thus the outer limits measurement is divided into 10 time intervals of equal length. Each time interval may be assigned a character from a character set. The character set may include a number of unique characters that are equal to the base number. Here, the character set is the numbers '0-9.' Time interval 2005-2006 is assigned the character '0,' time interval 2006-2007 is assigned the character '1,' and so forth. The creation time (or a portion of the creation time) "10am, 10.10.2009" falls within the fifth time interval (e.g., 2009-2010) and therefore a character '4' is appended to the storage hash value. Every year may be divided into 12 months (because the level of granularity is "1 Month"), wherein the first month, January, is assigned the character '0', February is assigned the character '1' and so forth. The creation time (or a portion of the creation time) "10am, 10.10.2009" falls within time interval covering the 10^{th} month and therefore a character '9' is appended to the storage hash value such that it becomes '49'. The same method may be applied for the other levels of granularities in order to determine the character that may be appended in the storage hash value for a given portion of the creation time. For example, for the "6Hours" level of granularity, a day may be split into four time intervals e.g. 0h-6h, 6h-12h, 12h-18h and 18h-24h and the creation time (or a portion of the creation time) "10am, 10.10.2009" falls within the second time interval and thus a character "1" may be appended to the storage hash value representing the level of granularity "6Hours". At the end of this procedure the storage hash value may have for example for each level of granularity of the first hierarchy a corresponding character.
d. The generated storage hash value is then stored in association with the entry in a reference field of the database 160.

Further, a user (e.g. a client device such as 110) may perform a fuzzy search for searching the database 160. For example, the user may request data entries created on 13/10/2012 from 3-8pm. In other terms, the user requests data entries having the storage parameter value that falls in the range of values between 10/13/12, 3pm to 13/10/2012, 8pm. Since the search request is a fuzzy search request, the user may expect the desired data entries as well other additional data entries. The fuzzy search may be performed as follows
1. The lowest level of granularity into which a value of the range of values is encodable using the one or more levels of granularities (e.g. "1Year", "1Month", "1 Day", "12Hours", "6Hours", "1Hour") is determined. In this example, the lowest level of granularity is "1 Hour" since the range is defined at the hour level for a range that covers 5 hours only i.e. it didn't reach the other level of granularity of "6Hours". This lowest level of granularity may be referred to as a reference level.
2. Next, a second hierarchy of the levels of granularities in which the levels of granularities are ordered from the highest level of the granularity of the one or more levels of granularities (i.e. "1Year") to a selected level of granularity of the one or more levels of granularities (e.g. "6hours", "12Hours" etc.) ordered higher than the reference level ("1 Hour"). The level of granularity "6Hours" is ordered higher than the level of granularity "1 Hour". In this example, the range 3pm-8pm is covered by two time intervals, namely 12h-18h and 18h-24h. In this case, the selected level of granularity is the level of granularity in which the range 3pm-8pm falls within a single time interval. That is, the level of granularity "12Hours" or higher may be selected. Thus, the second hierarchy comprises levels of granularity in this order "1Year"->"1 Month"->"1 Day"->"12Hours". Avoiding the overlapping time intervals would allow using a single hash value to search for the range of values as described below (the method described above with reference to Figs. 2-4 deals with the case of overlapping intervals).
3. Next, a single search hash value indicative of the range of values is generated using the levels of granularities of the second hierarchy. The generation of the search hash value may be performed using the same method as the one used for generating the storage hash value.
4. Having a single search hash value may allow searching the database to identify database entries that contains (or associated with) a storage hash value that matches (i.e. equal to) the search hash value.
5. returning the identified database entries.

However, if the number of the identified database entries is smaller than a predetermined minimum number of results the above steps 1)-5) may be repeated by selecting the level of granularity "Day" or "month" (i.e. higher than the level of granularity "12Hours" that is selected before) for step 1).

## Claims

1. A computer implemented method for performing a fuzzy search for data stored in a database (160), the method comprising:
a) providing a storage parameter descriptive of data entries stored in the database (160);
b) defining one or more different levels of granularities of values of the storage parameter;
c) for each entry of at least part of the data entries
o determining a value of the storage parameter;
o determining for the determined value of the storage parameter a smallest level of granularity of the one or more levels of granularities into which at least part of the determined value of the storage parameter is encodable;
o determining a first hierarchy of levels of granularities in which the levels of granularities are ordered from the highest level of the one or more levels of granularities to the determined smallest level of granularity;
o generating a storage hash value indicative of the determined value using the levels of granularities of the first hierarchy;
o storing the generated storage hash value in a reference field of the database (160) in association with the entry;
d) receiving a fuzzy search request to search the database (160), the fuzzy search request including a range of values of the storage parameter;
e) determining as a reference level the lowest level of granularity into which a value of the range of values is encodable using the one or more levels of granularities;
f) determining a second hierarchy of levels of granularities in which the levels of granularities are ordered from the highest level of the granularity of the one or more levels of granularities to a selected level of granularity of the one or more levels of granularities ordered higher than the reference level;
g) generating a single search hash value indicative of the range of values using the levels of granularities of the second hierarchy;
h) searching the database (160) to identify a database entry that has a storage hash value matching the search hash value; and
i) returning the identified database entry.

2. The method of claim 1, wherein the selected level of granularity comprises one of:
- the smallest level of granularity of the one or more levels of granularities that is higher than the reference level; and
- the second smallest level of granularity of the one or more levels of granularities that is higher than the reference level.

3. The method of any of the preceding claims, wherein the selected level of granularity is selected such that the search hash value represents a single interval of data entries of the data entries containing the range of values.

4. The method of any of the preceding claims, the method further comprising: in response to determining that a number of returned identified database entries is smaller than a predetermined minimum number of results repeating steps f) -i) for the selected level of granularity being another level of granularity of the one or more levels of granularities that is higher than the selected level of granularity level.

5. The method of claim 4, wherein the fuzzy search request indicates the predetermined minimum number of results.

6. The method of claim 4, wherein the predetermined minimum number of results is received in response to retuning the identified database entry.

7. The method of claim 1, wherein the storage parameter comprises at least one of:
- Storage time, and
- Storage location.

8. A computer implemented method for performing a fuzzy search for data stored in a database (160), wherein a storage parameter descriptive of data entries stored in the database (160) is provided, wherein one or more different levels of granularities of values of the storage parameter are defined; the method comprising:
- receiving a fuzzy search request to search the database (160), the fuzzy search request including a range of values of the storage parameter;
- determining as a reference level the lowest level of granularity into which a value of the range of values is defined using the one or more levels of granularities.
- determining a hierarchy of levels of granularities in which the levels of granularities are ordered from the highest level of the granularity of the one or more levels of granularities to a selected level of granularity of the one or more levels of granularities ordered higher than the reference level;
- generating a single search hash value indicative of the range of values using the levels of granularities of the second hierarchy;
- providing a request to the database (160) to identify a database entry that contains a storage hash value that matches the search hash value; and
- receiving the identified database entry.

9. A computer implemented method for storing data in a database (160), the method comprising:
- providing a storage parameter descriptive of data entries stored in the database (160);
- defining one or more different levels of granularities of values of the storage parameter;
- for each entry of at least part of the data entries
o determining a value of the storage parameter;
o determining for the determined value of the storage parameter a smallest included level of granularity of the one or more levels of granularities;
o determining a first hierarchy of levels of granularities in which the levels of granularities are ordered from the highest level of the one or more levels of granularities to the determined smallest level of granularity;
o generating a storage hash value indicative of the determined value using the levels of granularities of the first hierarchy;
o storing the generated storage hash value in a reference field of the database (160) in association with the entry.

10. A computer program product computer program product comprising computer executable instructions to perform the method steps of the method of any one of the preceding claims.

11. A computer system (100, 600) for performing a fuzzy search for data stored in a database (160), the computer system (100) being configured for:
- providing a storage parameter descriptive of data entries stored in the database;
- defining one or more different levels of granularities of values of the storage parameter;
- for each entry of at least part of the data entries
o determining a value of the storage parameter;
o determining for the determined value of the storage parameter a smallest included level of granularity of the one or more levels of granularities;
o determining a first hierarchy of levels of granularities in which the levels of granularities are ordered from the highest level of the one or more levels of granularities to the determined smallest level of granularity;
o generating a storage hash value indicative of the determined value using the levels of granularities of the first hierarchy;
o storing the generated storage hash value in a reference field of the database (160) in association with the entry;
- receiving a fuzzy search request to search the database (160), the fuzzy search request including a range of values of the storage parameter;
- determining as a reference level the lowest level of granularity into which a value of the range of values is defined using the one or more levels of granularities.
- determining a second hierarchy of levels of granularities in which the levels of granularities are ordered from the highest level of the granularity of the one or more levels of granularities to a selected level of granularity of the one or more levels of granularities ordered higher than the reference level;
- generating a single search hash value indicative of the range of values using the levels of granularities of the second hierarchy;
- searching the database (160) to identify a database entry that contains a storage hash value that matches the search hash value; and
- returning the identified database entry.

12. A computer-implemented method, comprising:
- receiving, by a processor (601), a request to search a database (160), the request including a first search parameter identifying a first range of values;
- generating, by the processor (601), at least one search hash value in response to the request, wherein each search hash value represents an interval containing values, intervals being non-overlapping;
- searching, by the processor (601), the database (160) to identify a database entry that contains a search hash value from the at least one search hash value in a reference field of the database entry; and
- returning, by the processor (601), the identified database entry.

13. The computer-implemented method of claim 12, wherein combining the interval corresponding to each search hash value from the at least one search hash value forms a combined interval that encompasses the first range of values.

14. The computer-implemented method of claim 12, wherein the length of a search hash value is inversely proportional to the length of the interval.

15. The computer-implemented method of claim 12, wherein the request includes a second search parameter identifying a second range of values and conditional logic joining the first search parameter and the second search parameter.
